# EUROPEAN PATENT APPLICATION

(11) **EP 3 544 321 A1**
(43) Date of publication of application: **25.09.2019**
(21) Application number: 18162509.6
(22) Date of filing: 19.03.2018
(51) Int. Cl.: H04S 7/00

(54) **METHOD FOR DETERMINING LISTENER-SPECIFIC HEAD-RELATED TRANSFER FUNCTIONS**

(71) Applicant: Österreichische Akademie der Wissenschaften, 1010 Wien (AT); VRVis Zentrum für Virtual Reality und Visualisierung Forschungs-GmbH, 1220 Vienna (AT)
(72) Inventor: Majdak, Piotr, 1120 Wien (AT); Kreuzer, Wolfgang, 1110 Vienna (AT); Baumgartner, Robert, 1100 Vienna (AT); Mihocic, Michael, 3430 Tulln (AT); Reichinger, Andreas, 1150 Vienna (AT)
(74) Representative: Patentanwaltskanzlei Matschnig & Forsthuber OG

(57) **Abstract**

A method for determining listener-specific head-related transfer functions is described. The method comprising the steps of:
A) providing a visual representation of the head and each of the auricles, wherein for each auricle the visual representation includes visual information of the overall shape of the auricle and of anatomical components of the auricle;
B) calculating, using said visual representation, three-dimensional polygon meshes, including auricle meshes and a head mesh, which respectively model the shapes of the head and auricles, wherein the auricle meshes (60) preferably include shape information of auricle components such as the entry (65) of the ear canal, the concha (66), the fossa (63), and the backside of the auricle (69);
C) merging the polygon meshes to a three-dimensional combined mesh, in which the auricle meshes are located at proper locations with respect to the head mesh;
D) calculating HRTFs based on the combined mesh.

## Description

### Field of the invention and description of prior art

The present invention relates to a method for determining head-related transfer functions (abbreviated as HRFTs) which are listener-specific to a specific individual.

When sound arrives at the ear drums of a (usually human) listener, the sound is filtered by the head, auricles, and -to a lesser extent- torso of the listener's body. This filtering can be described by HRTFs, which describe the relation between the sound spectrum of the original sound and the sound spectrum of the sound arriving (and perceived) at the ear drums. Generally, HRTFs depend on the spatial position of a sound source and the listener's anatomy; in fact, HRTFs heavily depend on the particular geometry of the body parts, primarily the geometry of the auricles and the head, and thus they are strongly listener-specific. Thus, the HRTFs correlate with the physical characteristics of the individual, primarily the shapes of the individual's head and auricles. In this disclosure the term "listener" is used for an individual for whom an HRTF is to be derived or has been derived. The individual is usually a (specific) human person, but the application may be extended to animals as well, in particular mammals. The term "auricle" or "pinna" denotes the part of the outer ear at the outside of the head, including the entry to the ear canal which is surrounded by the pinna proper.

One use of HRTFs is in filters used for creating spatial audio via headphones, a technique called binaural virtual acoustics (BVA). The challenge of BVA is the acquisition of accurate listener-specific HRTFs.

One method to measure HRTFs is acoustical measurement using microphones in the ear canal of a person, or a replica of the person's head, placing the sound source at various positions, in particular with varying directions, with respect to the person whose HRTFs are to be measured. Measurement of HRTFs is a difficult and resource-demanding procedure, which is often uncomfortable for the listener.

As an alternative to measurements, HRTFs can also be obtained by numerical calculation using a three-dimensional (3D) geometrical model of the listener. Suitable software for calculating HRTFs from a given 3D model are well-known. For acquiring the geometry, prior art used 3D laser scans or silicon impressions scanned in CT devices or scans by means of MRI. These methods are usually not applicable by a consumer at home, where such sophisticated equipment is not available. Other prior art methods used photogrammetric reconstruction based on multiple two-dimensional photographs of the listener for calculating a 3D geometrical representation of the listener. The HRTFs calculated from such 3D models were found to be generally poor in that they did not produce a sufficient spatial sensation with the listener, often causing a so-called "internalisation" (i.e., spurious location of the source as being inside the head), as a result from inaccuracies of the underlying 3D representations.

Furthermore, for checking the validity of an HRTF, prior art methods consider manual analysis by means of visually analysing amplitude spectra. This approach of evaluating an HRTF is not accurate to estimate the actual HRTF quality and is problematic with respect to reproducibility.

US 9,544,706 B1 describes the concept of taking photographs of the pinna, creating a 3D model of the pinna, calculate HRTF, i.e., "a plurality of morphological parameters describing user's pinna" or "determine a customized HRTF", associate the HRTFs with a user's profile, and apply the HRTFs thus obtained to headphone signals. While this method presents a full chain from the pictures to the binaural signal, it does not provide sufficient details to successfully realize functional HRFTs, in particular with regard to requirements of a valid 3D model and the procedure of deriving the HRTFs from 3D models. Another, similar method for creating HRTFs is described in US 2012/0183161 A1.

WO 2017/116308 A1 discloses a method for generating customized HRTFs by taking a photo of the head, determining the scaling factor, taking a second photo of the ear, parametrizing a pinna model by means of the Active Shape Model with manually provided control points, to derive a personalized HRTF based on that model combined with the scaling factor. The Hough transform is used to find a best match between the arcs of the pinna and those from an HRTF database. This method does not describe a calculation of HRTFs, but a matching procedure to an existing HRTF database, which is required a priori.

Therefore, it is an object of the invention to overcome the disadvantages of the prior art. In particular, a method for determining HRTFs is sought which provides a reliable spatial experience of sounds to the listener. Thus, the invention shall provide a methodology for obtaining a sufficiently accurate 3D model of listener's head and auricles suitable for the calculation of HRTFs. Preferably, the method should allow acquisition of HRTFs at home, i.e., without specialized equipment. Further, an evaluation of HRTFs may be suitable for finding modifications of the procedure and/or data to achieve accurate HRTFs.

### Summary of the invention

The above-mentioned aim is met by a method as described in the independent claim 1. In particular, the method comprises the steps of:
A) providing a visual representation of the head and each of the auricles, wherein for each auricle the visual representation includes visual information of the overall shape of the auricles and of anatomical components of each of the auricles;
B) calculating, using said visual representations, a three-dimensional representation comprising at least one polygon mesh, including auricle meshes and a head mesh, which respectively model the shapes of the head and auricles, the auricle meshes comprising information about the shape of the mentioned auricle components;
C) in case that the three-dimensional representation comprises separate polygon meshes, merging the polygon meshes to a three-dimensional combined mesh, wherein in this combined mesh the auricle meshes are located at proper locations with respect to the head mesh;
D) calculating HRTFs based on the combined mesh.

The invention is based on the inventors realizing that the 3D model has to fulfil requirements for representing the listener's geometry, where the accuracy of the auricle geometry is essential and has different requirements than the head geometry.

In particular, the mentioned visual information of anatomical components of the auricle relates not only to the overall shape of the auricle, but also to the shape of typical auricle features. These anatomical components of the auricle may advantageously include the entry of the ear canal, the concha, the fossa, and the backside of the auricle. The inventors noted that the quality of the HRTFs will heavily depend on the presence of sufficient information about the shape of these features in the data of the visual representation and the polygon meshes, respectively; further components of the auricle may be included as well, to further improve the quality/accuracy of the HRTFs. Hereinafter, the term "depiction" is used to denote the parts of the visual representations which relate to the auricles and the head, respectively. Moreover, it is usually advantageous to have the parts of the visual representations which relate to the auricles and the head, respectively, which are hereinafter referred to as depictions.

The visual representation, and more specifically the depictions, may be obtained, in general, from any available source. For instance, the visual representation may be already existing, or it is prepared for the deriving process of HRTFs according to the invention. The depictions of the auricles and the head may be integrated, but preferably they are obtained and processed as separate instances. In the latter case in order to facilitate preparing and handling of the depictions, it may advantageous to prepare the depictions of the auricles separately from each other and from the depiction of the head.

Furthermore, it may be advantageous to operate with separate meshes for the auricles and head, since this can facilitate handling of the different requirements for the auricles and the head. In particular, the requirements of accuracy are much higher for the auricle meshes than for the head mesh. Thus, in this case in step (B) the auricle meshes and the head mesh of the three-dimensional representation is obtained as meshes which are independent of each other, and then step (c) is performed by merging the auricle meshes and the head mesh to a three-dimensional combined mesh, by having the auricle meshes replace corresponding portions in the head mesh and stitching the auricle meshes to the head mesh.

In many suitable embodiments of the invention the auricle and head meshes may be composed of a respective plurality of triangles; the polygons or triangles will have an average size in each of the head and auricle meshes. Advantageously, the average size in the head mesh is greater than the average size in the auricle meshes, since this can help reducing calculation time for the head mesh and avoiding unfavourable influences of the head mesh upon the auricle meshes. Depending on the actual application, the average size in the head mesh may be just slightly larger, or by a factor of at least 1.4, preferably at least 2. Moreover, a mesh - i.e., the individual head and auricle meshes or the combined mesh - may be scaled according to at least one distance value which was previously taken at the listener's head and/or auricles, for instance during or at the end of a photo session.

In many preferred embodiments of the invention, depictions are prepared by taking one or more sets of photographs (e.g., through respective "photo sessions") of the auricles and head of the specific individual, wherein each set includes photographs taken at various orientations of the camera towards the individual's auricle or head. For instance, separate sets may be taken for the auricles and the head, respectively. The photographs may be taken using a suitable photo camera or a video camera. In fact, the visual representation, in particular the depictions or the photograph sets, may be obtained using frames of a video featuring the individual.

During preparing the depictions, such as taking the photographs, it may be advantageous to use a lighting system for illuminating the head and/or auricles. In particular, for an auricle, the lighting system is preferably configured in a suitable manner so as to illuminate specific components of the auricle. For instance, the lighting system may provide lighting into the ear canal, lighting along the navicular fossa, lighting into the lower concha, and/or lighting behind the auricle (auricle backside). Such a lighting system may include a diffuse lighting and at least one additional lighting source, each of said additional lighting source configured to specifically illuminate a respective selected component of the auricle as mentioned. These additional lighting sources may be integrated in the diffuse lighting or realized as separate light sources; on the other hand, a lighting source may be omitted in the case that the diffuse lighting is already sufficient for illuminating the respective feature(s) of the auricles.

Advantageously, the individual may be prepared before preparing the depictions, such as taking the photographs (or generally, preparing the visual representations). Thus, the individual's head and auricles may be prepared to optically reveal the auricles. This treatment may include for each auricle: reversible removing hair from the auricle, e.g., by binding back the hair, combing the hair etc., trimming hair present at the auricle, shaving the complete auricle or selected areas of the auricle.

Furthermore, in step (A) before preparing the depictions the skin surface of at least the auricles may also be treated by applying a mattifying liquid or powder. This serves to avoid scattering of light at different layers of the skin; also, the skin will obtain a more uniform complexion. The removal of hair may take place before and/or after the mattifying liquid/powder is applied.

It is remarked that it was found that a merely geometric description of the head and auricles is usually sufficient for calculation of good HRTFs, since the skin is treated merely as reflective for the acoustic waves. Therefore, further acoustic properties such as skin impedance, are negligible in the context of calculating HRTFs.

Before step (D) (i.e. calculating the HRTFs) it may be advantageous to also include a step (D0) of: adapting the combined mesh by adjusting the orientation of the combined mesh to a given coordinate axis system. This step (D0) may further include, for each auricle, the operation of hollowing out the ear canal in the combined mesh such that it corresponds to the shape of the listener's ear canal.

In a further aspect of the invention, a methodology is proposed to immediately validate the perceptual relevance of the calculated HRTFs. Thus, the HRTF calculation may be combined with an HRTF evaluation such that parts of the method are iteratively performed until it results in sufficiently accurate HRTFs. A method comprising such evaluation may comprise the additional steps of
E) evaluating the HRTFs and determining whether the HRTFs have sufficient quality;
F) modifying the combined mesh and repeating the procedure starting from step (D).

Further suitable aspects and benefits of the invention will become evident from the below description of an embodiment of the invention.

### Brief description of the drawings

In the following, in order to further demonstrate the present invention, illustrative and non-restrictive embodiments are discussed, as shown in the drawings, which show:
- Fig. 1: shows a flow chart indicating the main steps of the method according to the embodiment of invention;
- Fig. 1a: shows a block diagram of a setup for realizing the process shown in Fig. 1;
- Fig. 2: illustrates the application of mattifying liquid;
- Figs. 3a and 3b: illustrate a lighting system for the photograph sessions taken with the listener, in a side view (Fig. 3a) and a top view (Fig. 3b);
- Figs. 4a and 4b: illustrate the photo session for one auricle, in this case of the left ear, again in a side view (Fig. 4a) and a top view (Fig. 4b);
- Figs. 5a and 5b: illustrate the photo session for the head, again in a side view (Fig. 5a) and a top view (Fig. 5b);
- Fig. 6: shows an example of an auricle mesh of a left ear (rendering corresponding to a lateral view);
- Fig. 7: shows an example of a head mesh (rendering as perspective view);
- Figs. 8a and 8b: show a combined mesh resulting from combining the meshes of Fig. 6 and 7, in respective perspective (Fig. 8a) and lateral (Fig. 8b) renderings;
- Fig. 9: shows coordinates for the combined mesh.

### Detailed description of embodiments of the invention

The detailed discussion of an exemplary embodiment of the invention given below is intended to illustrate the basic concepts and further advantageous developments of the invention. It will be evident to the person skilled in the art to freely combine several or all of the features discussed in relation to the embodiment and variants discussed here, as deemed suitable for a specific application of the invention. Throughout this disclosure, terms like "advantageous", "exemplary", or "preferable" indicate elements or dimensions which are particularly suitable (but not essential) to the invention or an embodiment thereof, and may be modified wherever deemed suitable by the skilled person, except where expressly required. It will be appreciated that the invention is not restricted to the exemplary embodiment, which is given for illustrative purpose, merely representing suitable ways to implement the invention. Furthermore, it will be clear that the reference numbers used in the claims are merely intended to improve the readability of the claims, but neither the reference numbers nor the way they are used in the claims are to be construed as limiting the scope of the claims.

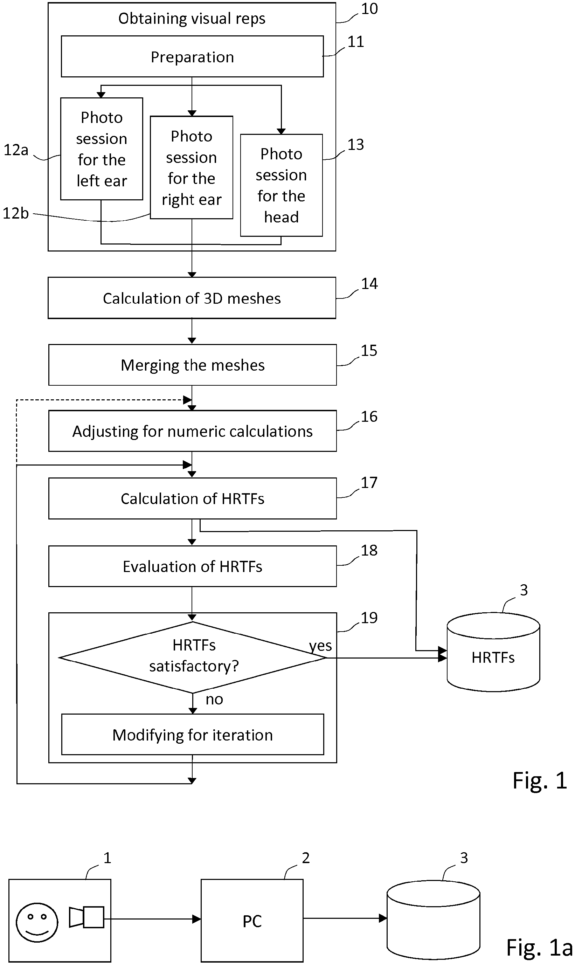

The embodiment of the invention discussed in the following uses photographs taken by a digital camera for deriving HRTFs via separate 3D meshes for the auricles and the head of the listener. Specifically, as illustrated in Fig. 1 the steps 10-19 of the method of embodiment of the invention are as follows.

In a first step 10, visual representations of the head and auricles are provided. This step includes a preparatory stage and a photo sessions stage: In a preparatory stage 11, the listener, the room, and the camera system are prepared. Then, photo sessions 12a, 12b produce two visual representation of the listener's left and right auricles, respectively, and a third photo session 13 captures the listener's head. The photo sessions 12a, 12b, 13 of the photo sessions stage may be done in any sequence as may be suitable. It will be clear that in other (not shown) embodiments, the visual representation may be taken in one whole photo session. In step 14, 3D meshes of the head, left auricle, and right auricle are calculated based on the visual representations, and these meshed are merged into a single joint 3D object ("combined mesh") in step 15. Step 16 prepares the combined mesh for the subsequent numeric calculations, which are done in step 17 to obtain HRTFs.

Optionally, step 18 evaluates the HRTF quality; depending of the result obtained from step 18 the steps 16 to 18 may be repeated iteratively until HRTFs of sufficient quality or accuracy are obtained. The operations carried out in the individual steps and stages according to the embodiment of the invention are described in detail below. Where the discussion refers to only one of the ears/auricles, it is understood that the same considerations apply *mutatis mutandis* for the other ear, by virtue of the principal mirror symmetry between the two ears.

Referring to Fig. 1a, the preparation of the visual representation in step 10 is done, in the shown embodiment, by taking photographs in a suitably equipped room 1 (Fig. 1a), such as a photographer's studio or simply a room having sufficient lighting, where the listener can take his/her position on a seat or the like. The further steps will be made on a computer system such as a PC 2, and the HRTFs are stored on a data storage medium 3, which may be internal or external to the computer system 2.

### A. Obtaining visual representations of the head and auricles

### A1. Preparation of the listener's ears and head, and setting up a room and camera system for photo shootings

In a first stage 11 the listener is prepared, which serves to ensure good visibility of the auricles and suitable surface quality of the skin. The listener uses a nose-and-ear-hair trimmer to trim all hair on the auricles. In case that head hair might obstruct the visibility of parts of the auricles, ribbons or like accessories are used to pull back head hair such that both auricles are visible (i.e., not covered or obscured by hair) from all angles.

As a protection for the ear canals, earplugs are inserted into the left and right ear canal, respectively. Each earplug is made of a disposable foam and has substantially cylindrical shape of a length of approx. 1 cm; in the centre of the outward-oriented base face of each earplug, a hollow is cut out and marked with a black pen; this marking serves to indicate the position of the earplug, so as to be able to identify the location of the entry to the ear canal in later steps. The earplug thus prepared is placed into the respective ear canal such that it closes the ear canal but does not protrude therefrom.

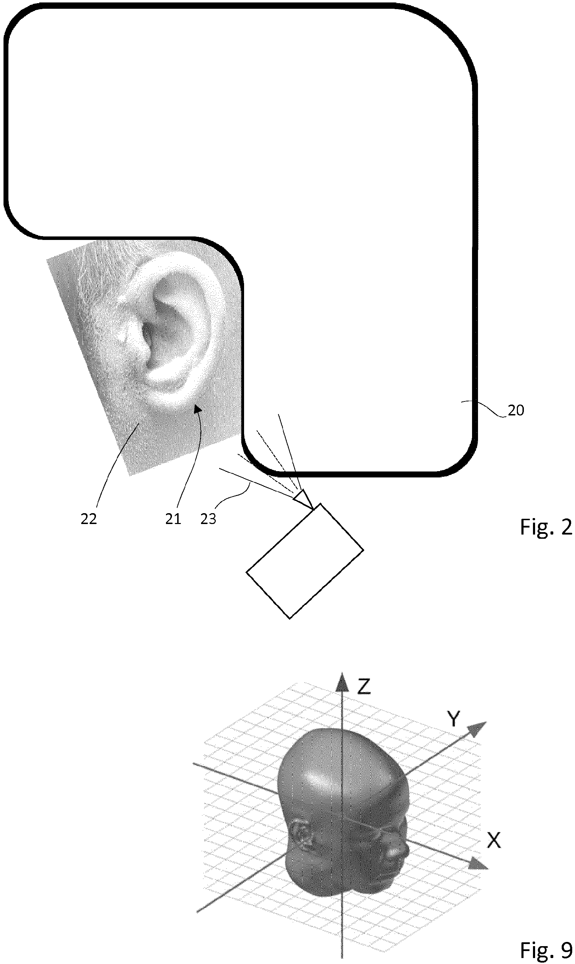

Referring to Fig. 2, each auricle - in the figure, only the left ear 21 is shown symbolically - and the surrounding region 22 of the head is sprayed with a mattifying liquid 23, also referred to as covering spray, coating spray, or scanning spray, in order to tarnish or mattify the skin surface. It is not limited to liquids, but may be a powder or have other consistency. In the present embodiment, for instance, the mattifying liquid is Helling 3D Laserscanning Entspiegelungsspray (Helling, Germany), but any other skin-compatible tarnishing cover may be used. While spraying the ear, the spraying of the hair and head is blocked by a cover 20 of suitable shape, for instance an L-shape; the cover 20 shown in Fig. 2 has a height and width of 40 cm. After the spraying, the trimming may be repeated, to remove any remaining hair in the ear; in fact, the sprayed mattifying liquid 23 will render any hair remaining on the auricle and/or surrounding skin better visible. In contrast, piercings and other permanent accessory need not be removed.

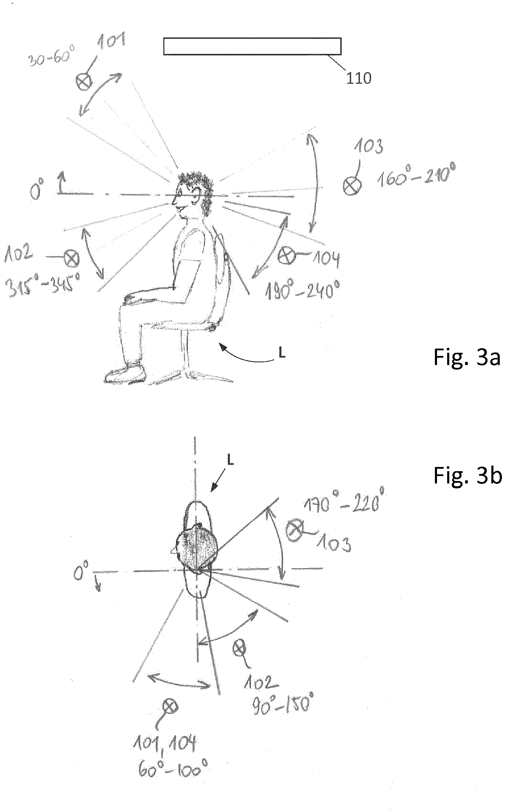

Referring to Figs. 3a and 3b, an advantageous setup for the room and the camera system 100 for photo shootings related to the subsequent photogrammetric reconstruction are as follows. The listener L takes a place (sitting or standing as will be suitable) in a room with a main lighting 110 of at least 1000 lux; the main lighting is diffuse (indirect lighting and/or wide light source area) so as to avoid sharp shadow contours on the listener. Additional light sources are placed at respective locations with predefined angle orientations at a suitable distance of e.g. 1-2 m; advantageous angular ranges of elevation θ and azimuth ϕ are respectively indicated in Figs. 3a and 3b. In the embodiment shown, the additional light sources include sources 101, 102, 103, 104 which respectively provide lighting into the ear canal (102), lighting along the navicular fossa (104), lighting into the lower concha (101), and lighting behind the auricle (103). The positions shown in Figs. 3a and 3b relate to lighting the left ear and have the entry of the ear canal as reference point; for lighting the right ear, it will be evident to use a mirrored arrangement. The depiction of light sources given in Fig. 3a is intended to specify suitable ranges of the elevation θ, while the azimuthal positions in Fig. 3a may be incorrect, for reasons of lack of space, (in particular for sources 101 and 102) and are to be derived from Fig. 3b.

The camera used may be any camera producing digital images; suitable parameters are as follows: aperture of 8.0 or more, a zoom of 80 mm or more (related to a full-frame sensor), a sensitivity of ISO 800 or more, preferably ISO 1600, automatic adjustment of the shutter speed to the aforementioned settings. Preferably, the camera allows adjusting the angle of the display. Preferably, the camera produces photographs in raw image format. In the present embodiment, for instance, the camera is a Canon PowerShot G1 X Mark II (Canon, Japan).

### A2. Taking photographs of listener's left and right auricles

In the following stages 12a and 12b, (at least) two photo sessions are done, namely, for the auricles of the left ear and right ear, respectively.

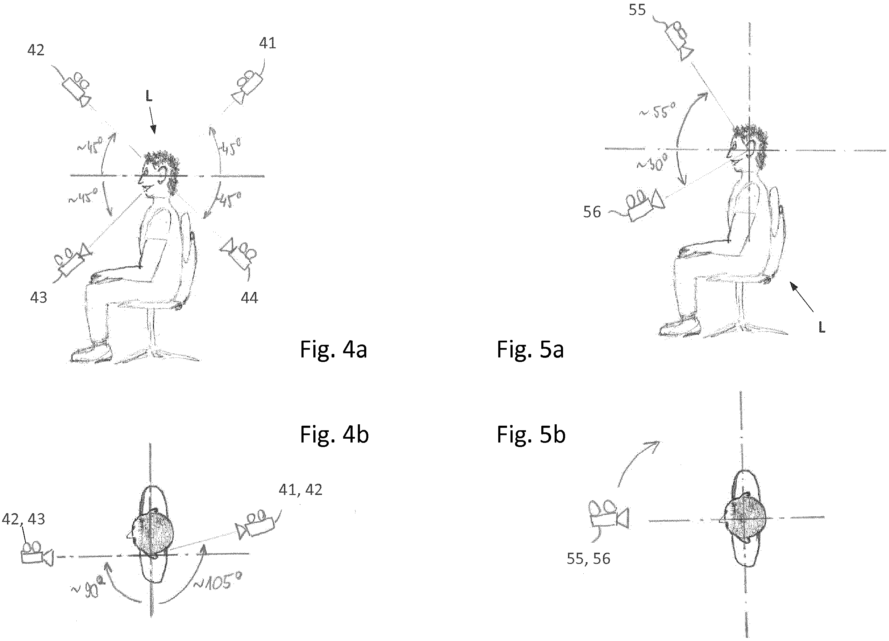

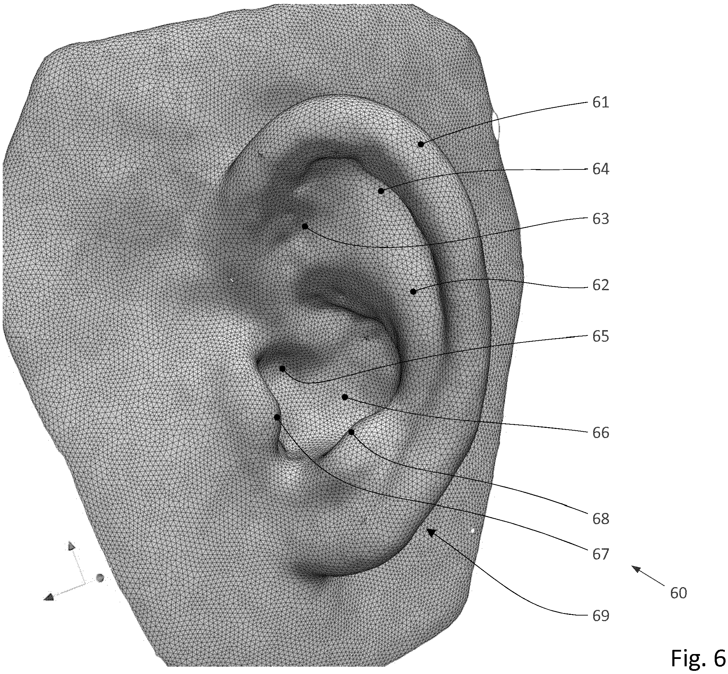

Referring to Figs. 4a and 4b, an advantageous photo sequence for an ear session of the left ear is as follows. The session starts by taking photos at a high elevation and behind the listener L. The distance is chosen so as to allow picturing the entire auricle in a sharp photograph; a typical value of distance is about 1 m. With each photo, the camera is moved a small step towards the front of the listener, at a constant elevation, providing approx. 10 photos per elevation. Positions 41 and 42 indicate the first and last camera position in this first "layer" at starting elevation of e.g. θ = 45°. Then the camera is lowered and again 10 photos are taken from various directions at a constant elevation. The camera is then lowered again, and so on, until a last layer at a final elevation of e.g. θ = -45° is reached. In total, photos from at least 8 elevation layers are taken resulting in at least 80 photos. It is important that the photos will include the details of the auricle, in particular the concha, ear canal entry, navicular fossa, and the area between the pinna back and the head (the various features of auricles are explained below in relation to step B and Fig. 6). If desired, the distance between two or more specific points of the auricle may be measured, which distance can be used later to provide a scale of the auricle for later scaling in the auricle mesh.

The photo session of the right ear is done in a like manner as that of the left ear after adapting the position of the additional lighting sources 101-104.

### A3. Taking photographs of listener's head

Fig. 5 illustrates the photo session for the head - stage 13 in Fig. 1. For the photo session of the head, the diffuse lighting of at least 1000 lux as mentioned above and the lighting source 103 for the pinna back is used, while other additional lighting sources are not needed. The photos of the head are shot at a larger distance as compared to the ear sessions, so as to be able to cover the whole head with each picture, for instance at 1.5 m. Advantageously, a typical photo sequence will include photos from all directions around the head at three elevations with approximately 40 photos in total. Fig. 5a illustrates the top elevation 55 at e.g. e.g. θ = 55° and the bottom elevation at e.g. θ = -30°; a third (middle) elevation at an elevation in the range of e.g. 0° to 15° is understood. The positions shown in Figs. 5a and 5b are given with respect to the centre of the head (middle point between the ears) of the listener L as reference point. In addition, the distance between the left and right temple is measured, by means of any suitable known measurement method.

### B. Calculation of 3D meshes of the head, left ear, and right ear

In this step 14, the photos from the three photo sessions are processed to obtain three 3D meshes. The calculation of the 3D meshes can be done using any photogrammetric software allowing to process 2D photos into 3D geometric representations. For instance, in the present embodiment the software Patch-Based Multi-View Stereo (PMVS, https://www.di.ens.fr/pmvs) is used. The calculations are done separately for the left ear, the right ear, and the head, and result in three 3D meshes.

The meshes as directly obtained from these calculations may contain holes or other defects, and the meshes are cleaned up as in a typical post-scan clean-up procedure, which may include: closing small holes in the surface, remeshing to obtain a smooth surface, and/or removing isolated vertices and faces to obtain a single object. Furthermore, in the head mesh, all elements that correspond to the torso and neck are removed and the opening which corresponds to the neck is closed. If desired, the meshes may also be decimated to ease the processing in any of these operations.

The head mesh is scaled corresponding to the head width given by the aforementioned distance between the left and right temples. The auricle meshes are scaled to the respective sizes of the shapes of the ear portions in the head mesh; alternatively, the auricle meshes may be scaled using a distance measured between two or more specific points of the auricle as mentioned above.

The head mesh is smoothed and remeshed to a given number of elements. The inventors found that a number of between 60000 and 80000 is preferable, corresponding to an average edge length of 2 mm or less. The auricle meshes are smoothed and remeshed as well, preferably to an average edge length of 1 mm, which typically will yield a number of elements between 5000 and 6000.

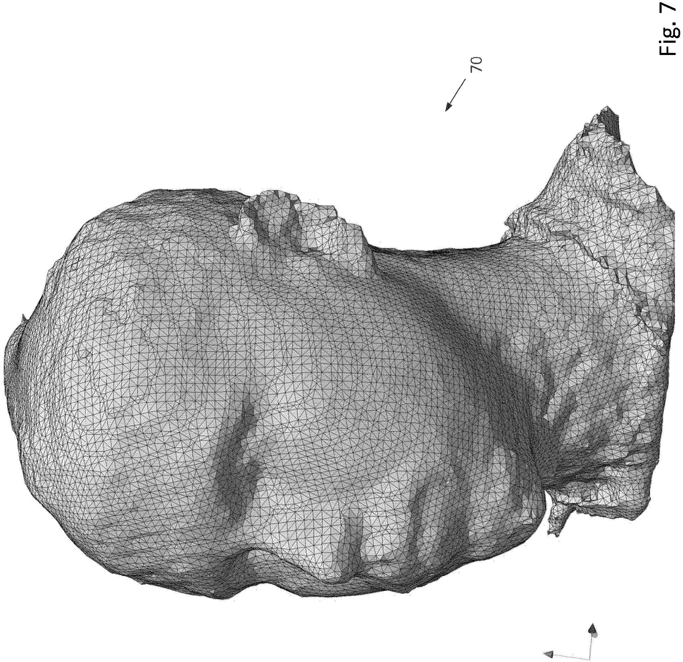

Figs. 6 and 7 show examples of typical meshes thus obtained, namely a left-ear auricle mesh 60 and a head mesh 70. As can be seen in Fig. 6, the auricle mesh 60 provides a faithful description of the auricle as a whole, but also of the components of the auricle with regard to their shapes, such as: helix 61, antihelix 62, fossa 63, scapha 64, entry 65 of the ear canal, concha 66, tragus 67 and antitragus 68, as well as (not visible in Fig. 6) the backside of the auricle 69. In contrast, the head mesh 70 (Fig. 7) may be less detailed, and in particular the eye regions and the nose openings need only by roughly represented.

### C. Merging the three meshes to a joint object

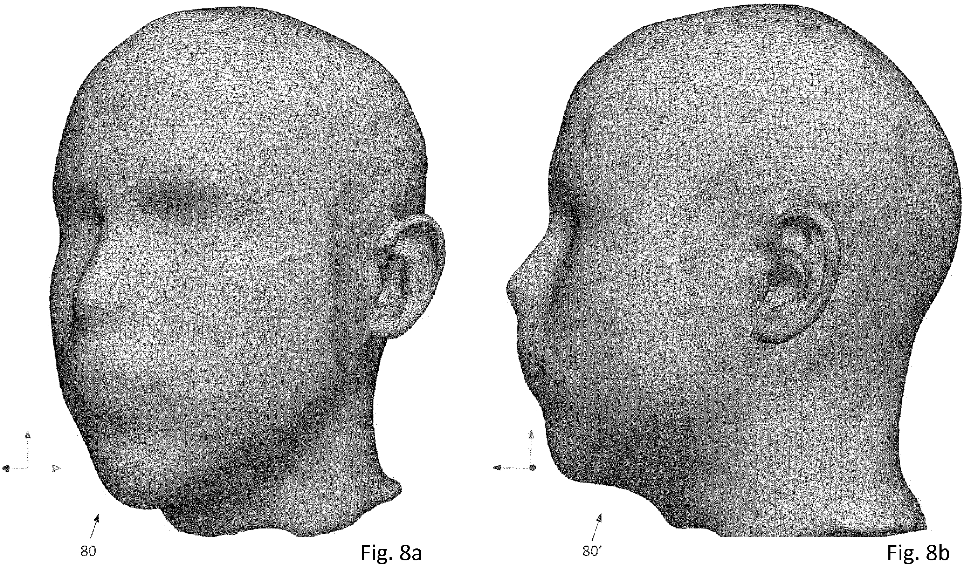

The three 3D meshes are merged to a joint 3D object, referred to as combined mesh - step 15 of Fig. 1. The merging can be done in any suitable software such as Blender, Meshlab, and OpenFlipper, without being limited to these examples. In that software, the auricle meshes are aligned to cover the regions of the ears in the head mesh, then, these regions are removed from the head meshes. Then the auricle meshes are stitched to the head mesh creating a single mesh. Then the single mesh is remeshed to create to approximately regular elements with uniform density with only a minor change in the number of elements. Figs. 8a and 8b show an exemplary combined mesh as obtained from merging the meshes 60 and 70, in respective renderings 80, 80' corresponding to perspective and lateral views.

### D0. Adapting the combined mesh for numeric calculations

This step 16 is optional, but was found to be advantageous in many cases. The combined mesh is then adapted by rotation and translation as needed to align it with a desired orientation as illustrated in Fig. 9: the Y axis is the interaural axis, the X axis is the crossing of the midsagittal and Frankfurt plane (which is the plane touching the left-hand ear canal from above and the of lower edge of the eye orbita from below), and the Z axis is the vertical line crossing the X and Y axes. In each ear, the ear canal is hollowed out such that it corresponds to that of the listener's canal. If required, corrections by hand may be added for the representations of the concha, the navicular fossa, and the scapha: their representations in the mesh are modified such that they correspond to those from the photographs. In each auricle mesh, a single element in the centre of the part corresponding to the ear canal is designated as the receiver element for the calculations.

### D. Calculation of HRTFs

In this step 17, HRTF calculations are done based on the combined mesh, by means of boundary element methods (BEM) known in the art. For this any suitable software may be used, such as Mesh2HRTF (http://mesh2hrtf.sourceforge.net). HRTFs are calculated for both ears and various sound sources. At least 1000 source positions are used for a single distance. The calculations are done for at least 50 frequencies in the range between 100 Hz and 20 kHz. When used with Mesh2HRTF, a SOFA file describing all HRTFs of a listener is created. The calculations are done on a suitable computer system 2 (Fig. 1a), such as a modern desktop PC, where the calculation time is typically several hours. The HRTFs thus obtained are stored to a data storage medium 3, such as a permanent memory or hard disk of the PC 2 or an external storage device. In the embodiment, for instance, the HRTFs are written on a data storage medium such as a data DVD or a memory stick, for subsequent transfer to a digital music player system capable of binaural virtual acoustics. In these systems, binaural signals are created to be presented via headphones to the listener, and the process of creating the binaural signals involves filtering of audio signals with said HRTFs.

### E. Evaluation of the HRTF quality

Optionally, the quality of the HRTFs may be evaluated - step 18 of Fig. 1. The result of this step may be used as a criterion in a subsequent step F.

The evaluation step may, for instance, comprise two parts that check the calculated HRTF set on a perceptually relevant basis for its spatial entropy and compatibility to HRTF sets of a database. For these checks, established computational auditory models of spatial perception are used that require binaural stimuli and reference HRTFs as input. One example for a suitable model is the sagittal-plane sound localisation model, as explained in: Baumgartner, Majdak, and Laback, "Modeling sound-source localization in sagittal planes for human listeners," J. Acoust. Soc. Am. (2014) 136, 791-802; other models may be suitable as well. The spatial entropy is assessed by using the calculated HRTF as both the binaural stimuli and the reference HRTFs. It thus evaluates the perceptual spatial quality of the calculated HRTFs for a listener being fully adapted to the calculated HRTFs (best case). The compatibility is assessed by using the calculated HRTFs only for the stimulus; for the reference HRTFs, other HRTFs are drawn from a database; databases suitable for this purpose are available in state of the art including the internet (e.g., https://www.sofaconventions.org/mediawiki/index.php/Files). This evaluates the perceptual spatial quality of the calculated HRTFs for a listener not being adapted to the calculated HRTFs (worst case).

For example, this evaluation routine may be realized by using the sound localisation model of Baumgartner, Majdak, and Laback (*op. cit*.). This model predicts measures of human sound localisation performance, such as the quadrant error rate and local polar RMS error, based on binaural stimuli and a set of reference HRTFs.

### F. Iterative repetition

In the case the result from step 18 indicates that the HRTFs are not satisfactory, the calculation and evaluation steps 17 and 18, if necessary also the adapting step 16 before them, are repeated until sufficiently accurate HRTFs have been obtained. For this, further modifications of the auricle meshes are made in this step 19. Such a modification will usually serve to compensate possible deviations of the meshes from the shapes of components as shown in the photographs (visual representation). For instance, a typical modification affects the representations of the concha, the navicular fossa, and/or the scapha, which may be shallow as compared to the actual shape of the respective ear component(s); these parts of the mesh are then improved by hollowing out, creating more deep concha, navicular fossa, and/or scapha, which also results in a "sharper" antihelix and antitragus (i.e., having stronger curvatures). Once the modifications are introduced, at least the calculation and evaluation steps are performed again. This is repeated until a pre-defined criterion is met. For instance, the criterion may be that certain quantities fall below (or rise above) predefined thresholds, where suitable thresholds can be derived from the HRTFs of the database used.

In the example where the sound localisation model is used to predict the quadrant error rate and local polar RMS error, the criterion is that (i) the spatial entropy is high enough to obtain predicted quadrant error rates below 18% and local polar RMS errors below 35° and (ii) the compatibility check yields mean quadrant error rates below 30% and local polar RMS errors below 44°.

In the case that the criterion is met, the HRTFs are stored to a data storage medium 3 as described under step D.

## Claims

1. Method for determining head-related transfer functions (HRTFs), wherein said HRTFs are listener-specific with respect to a specific individual, where said HRTFs correlate with physical characteristics of the individual including the shapes of the individual's head and auricles, the method comprising the steps of:
A) providing a visual representation of the head and each of the auricles, wherein the visual representation includes visual information of the overall shape of the auricles and of anatomical components of each of the auricles;
B) calculating, using said visual representation, a three-dimensional representation formed by at least one polygon mesh, including auricle meshes (60) and a head mesh (70), which respectively model the shapes of the head and auricles, the auricle meshes (60) comprising information about the shape of the mentioned anatomical components of the auricle;
C) in case said three-dimensional representation comprises separate polygon meshes, merging the polygon meshes to a three-dimensional combined mesh (80), in which the auricle meshes are located at proper locations with respect to the head mesh;
D) calculating HRTFs based on the combined mesh.

2. The method of claim 1, wherein said anatomical components of the auricle include the entry (65) of the ear canal, the concha (66), the fossa (63), and the backside of the auricle (69).

3. The method of claim 1 or 2, wherein step (A) includes preparing depictions of the head and each of the auricles, respectively, wherein the depictions of the auricles are prepared separately from each other and from the depiction of the head.

4. The method of claim 3, wherein during preparing the depictions a lighting system (100) is used for illuminating the head and/or auricles, wherein during preparing a depiction of an auricle said lighting system is configured to illuminate the auricles including specific anatomical components of the auricle as mentioned in claim 2.

5. The method of claim 4, wherein said lighting system includes a diffuse lighting (110) and at least one additional lighting source (101, 102, 103, 104), each of said additional lighting sources being configured to specifically illuminate a respective selected anatomical component of the auricle.

6. The method of any one of claims 3 to 5, wherein in step (A) before preparing the depictions the skin surface of at least the auricles is treated by applying a mattifying liquid or powder.

7. The method of any one of claims 3 to 6, wherein in step (A) before preparing the depictions, the appearance of the individual is prepared to optically reveal the auricles, said preparing including at least one of: removing hair from the respective auricle, trimming hair present at the respective auricle, shaving at least one area of the respective auricle.

8. The method of any one of claims 3 to 7, wherein the depictions are prepared by taking at least one set of photographs of the specific individual with regard to his/her auricles and head, preferably several separate sets for the auricles and head, respectively, wherein each set includes photographs taken at various orientations of the camera towards the individual's auricle or head.

9. The method of any one of claims 3 to 8, wherein the depictions are obtained from frames of a video.

10. The method of any one of the preceding claims, wherein in step (B) the auricle and head meshes have respective average sizes of polygon elements forming the respective meshes, wherein the average size in the head mesh is greater than the average size in the auricle meshes, for instance greater by a factor of at least 1.4, preferably of at least 2.

11. The method of any one of the preceding claims, where in step (B) or (D) the mesh is scaled according to at least one distance value which was taken at the listener's head and/or auricles during step (A).

12. The method of any one of the preceding claims, comprising the additional steps of
E) evaluating the HRTFs and determining whether the HRTFs have sufficient quality;
F) modifying the combined mesh and repeating the procedure starting from step (D).

13. The method of any one of the preceding claims, including the additional step of:
D0) adapting the combined mesh by adjusting the orientation of the combined mesh to a given coordinate axis system, prior to calculating HRTFs;
which step (D0) is performed before step (D).

14. The method of claim 13, wherein step (D0) includes, for each auricle, the operation of hollowing out the ear canal in the combined mesh such that it corresponds to the shape of the listener's ear canal.

15. The method of any one of the preceding claims, wherein
in step (B) the auricle meshes (60) and the head mesh (70) of the three-dimensional representation are obtained as meshes which are independent of each other, and
step (c) is performed by merging the auricle meshes (60) and the head mesh (70) to a three-dimensional combined mesh (80), by having the auricle meshes replace corresponding portions in the head mesh and stitching the auricle meshes to the head mesh.
